# EUROPÄISCHE PATENTSCHRIFT

(11) **EP 2 932 161 B1**
(45) Veröffentlichungstag und Bekanntmachung des Hinweises auf die Patenterteilung: **10.04.2019**
(21) Anmeldenummer: 13818663.0
(22) Anmeldetag: 16.12.2013
(51) Int. Cl.: F24D 11/00, F16K 11/00, F24D 12/02, F24D 19/10

(54) **MEHRKREISIGE HEIZUNGS- ODER KÜHLANLAGE MIT PUFFERSPEICHER UND VERFAHREN ZUM BETREIBEN EINER MEHRKREISIGEN HEIZUNGS- ODER KÜHLANLAGE MIT PUFFERSPEICHER**
MULTI-CIRCUIT HEATING OR COOLING SYSTEM WITH STORAGE TANK AND METHOD FOR OPERATING A MULTI-CIRCUIT HEATING OR COOLING SYSTEM WITH STORAGE TANK
INSTALLATION DE CHAUFFAGE OU DE REFROIDISSEMENT À PLUSIEURS CIRCUITS DOTÉE D'UN ACCUMULATEUR TAMPON ET PROCÉDÉ POUR FAIRE FONCTIONNER UNE INSTALLATION DE CHAUFFAGE OU DE REFROIDISSEMENT À PLUSIEURS CIRCUITS DOTÉE D'UN ACCUMULATEUR TAMPON

(30) Priorität: 17.12.2012 DE 102012024583
(43) Veröffentlichungstag der Anmeldung: 21.10.2015
(73) Patentinhaber: Meibes System-Technik GmbH, 04827 Gerichshain (DE)
(72) Erfinder: SCHULZ, Swen, 04838 Eilenburg (DE); PROSCHE, Tobias, 04416 Markkleeberg (DE)
(74) Vertreter: Hecht, Jan-David
(86) Internationale Anmeldenummer: PCT/EP2013/003792
(87) Internationale Veröffentlichungsnummer: WO 2014/095026

(56) Entgegenhaltungen:
- EP-A1- 1 614 944
- WO-A2-2009/063308
- DE-A1-102009 007 053
- DE-U1- 20 001 539

## Beschreibung

Die vorliegende Erfindung betrifft eine mehrkreisige Heizungs- oder Kühlanlage nach dem Oberbegriff von Anspruch 1 und ein Verfahren zum Betreiben einer mehrkreisigen Heizungs- oder Kühlanlage nach dem Oberbegriff von Anspruch 8.

Solche mehrkreisigen Heizungsanlagen weisen üblicherweise zwei Heizkreise auf, wobei diese Heizkreise unterschiedlich temperiert mit Wärmemedium versorgt werden. Dabei wird gewöhnlich die Wärmequelle gleitend am Bedarf des höher zu temperierenden Heizkreises (ungemischter Heizkreis) gefahren und der niedriger zu temperierende Heizkreis (gemischter Heizkreis) ist durch ein Mischventil an den Direktheizkreis angebunden und wird bei Bedarf mit Wärmemedium aus dem Rücklauf des ungemischten Heizkreises gespeist. Üblicherweise wird der ungemischte Heizkreis für Heizkörper verwendet und der gemischte Heizkreis steht beispielsweise für eine Fußbodenheizung zur Verfügung.

Solche mehrkreisige Heizungsanlagen sind mit unterschiedlichen Mischeinrichtungen beispielsweise aus der DE 198 21 256 C1, der DE 102 45 571 A1 und DE 10 2008 013 124 A1 bekannt. Natürlich lassen sich so auch Kühlanlagen betreiben, wobei dann Wärmesenken anstelle von Wärmequellen verwendet werden und Wärmequellen anstelle von Wärmesenken. Die DE 10 2009 007 053 A1 zeigt eine Vorrichtung nach dem Oberbegriff des Anspruchs 1. Die WO 2009/063308 A2 offenbart eine Vorrichtung zur Warmwasserbereitstellung mit einem sehr komplex aufgebauten Mehrwegemischventil zur Einbindung einer Solarvorrichtung.

Aufgabe der vorliegenden Erfindung ist es, eine mehrkreisige Heizungs- oder Kühlanlage mit einem gemischten Heizkreis so auszubilden, dass ein Pufferspeicher zur Speicherung von Wärme eingebunden werden kann. Insbesondere soll für den Pufferspeicher eine Vorrangschaltung vorgesehen sein und/oder der Pufferspeicher soll in eine Warmwasseraufbereitung, bevorzugt eine Trinkwarmwasseraufbereitung, eingebunden sein. Bevorzugt soll außerdem eine Einbindung von solarthermischen Wärmequellen möglich sein. Insbesondere soll diese mehrkreisige Heizungs- oder Kühlanlage konstruktiv besonders einfach und zudem auch kostengünstig aufgebaut sein.

Diese Aufgabe wird gelöst mit der mehrkreisigen Heizungsanlage nach Anspruch 1 und dem Verfahren nach Anspruch 8.

Vorteilhafte Weiterbildungen sind in den abhängigen Unteransprüchen angegeben.

Die Erfinder haben erkannt, dass durch Einsatz eines Mehrwegmischventils mit zumindest fünf Anschlüssen sich sowohl eine Vorrichtung zum Steuern und/oder Regeln für eine Heizung oder Kühlung als auch eine mehrkreisige Heizungs- oder Kühlanlage gemäß der gestellten Aufgabe besonders einfach und kostengünstig umsetzen lassen, wobei auch der Steuerungsaufwand besonders gering ausfällt, weil im Wesentlichen nur das Mehrwegemischventil angesteuert werden muss.

Hinsichtlich der Ausgestaltung des Mehrwegemlschventlls mit zumindest fünf Anschlüssen wird auf die Anmeldung "Mehrwegemischventil und Verfahren zum zeitlichen Steuern" des vorliegenden Anmelders vom 17.12.2012 Bezug genommen.

Es wird also eine mehrkreisige Heizungs- oder Kühlanlage bereitgestellt mit
- mindestens einer Wärmequelle, die Teil eines Heizquellenkreises, HK, mit einem Heizquellenkreisvorlauf, HK-VL, mit einer HK-VL-Temperatur und einem Heizquellenkreisrücklauf, HK-RL, mit einer HK-RL-Temperatur ist, und zumindest zwei Wärmesenken, wobei
- eine erste Wärmesenke Teil eines Pufferkreises, PK, mit einem Pufferkreisvorlauf, PK-VL, mit einer PK-VL-Temperatur und einem ersten Pufferkreisrücklauf, PK-RL1, mit einer PK-RL-Temperatur ist und
- eine zweite Wärmesenke Teil eines gemischten Heizkreises, MK, mit einem gemischten Heizkreisvorlauf, MK-VL, mit einer MK-VL-Temperatur und einem gemischten Heizkreisrücklauf, MK-RL, mit einer MK-RL-Temperatur ist,
   die sich dadurch auszeichnet, dass
- die erste Wärmesenke als Pufferspeicher für das Energie transportierende Medium ausgebildet ist, wobei der Pufferkreis einen zweiten Pufferkreisrücklauf, PK-RL2, mit einer PK-RL2-Temperatur aufweist,
- eine Verteilvorrichtung mit hydraulischen Mitteln zum Verteilen eines Energie transportierenden Mediums, die ein Mehrwegemischventil mit zumindest fünf Anschlüssen aufweist, vorgesehen ist
- und der Heizquellenkreis, der Pufferkreis und der gemischte Heizkreis zumindest mit einem der Anschlüsse des Mehrwegemischventils verbunden sind.

In einer bevorzugten Weiterbildung ist an den Pufferkreis eine Warmwasserbereitung, insbesondere an eine Trinkwarmwasseraufbereitung angeschlossen. Dann lässt sich eine Bereitstellung von Trinkwarmwasser mit der erfindungsgemäßen mehrkreisigen Heizungs- und Kühlanlage besonders effizient ermöglichen. Die Trinkwarmwasserbereitung weist bevorzugt einen ersten Wärmeübertrager auf, der den Trinkwarmwasserkreislauf vom Kreislauf des Energie transportierenden Mediums der Trinkwarmwasserbereitung trennt, wobei insbesondere im Kreislauf des Energie transportierenden Mediums der Trinkwarmwasserbereitung eine erste Umwälzpumpe vorgesehen ist. Dadurch kann auch der Pufferkreis mit Brauchheizwasser betrieben werden.

Weiterhin kann vorteilhaft vorgesehen sein, dass der Pufferkreis mit zumindest einer weiteren Wärmequelle verbunden ist, wobei bevorzugt zwischen Pufferspeicher und weiterer Wärmequelle ein zweiter Wärmeübertrager vorgesehen ist. Hierdurch kann beispielsweise eine Solarthermieanlage eingebunden werden, die den Pufferspeicher zusätzlich mit Wärme versorgt.

Die Erfindung zeichnet sich außerdem dadurch aus, dass
- der HK-VL mit einem ersten Anschluss des Mehrwegemischventils verbunden ist,
- der HK-RL sowohl mit dem MK-RL als auch parallel mit dem PK-RL2 verbunden ist,
- der PK-RL1 mit einem zweiten Anschluss des Mehrwegemischventils verbunden ist,
- der PK-VL mit einem dritten Anschluss des Mehrwegemischventils verbunden ist,
- der MK-RL mit einem vierten Anschluss des Mehrwegemischventils verbunden ist,
- der PK-RL2 mit dem MK-RL verbunden ist
- der MK-VL mit einem fünften Anschluss des Mehrwegemischventils verbunden ist. Dann lässt sich eine konstruktiv besonders einfach aufgebaute Heizungs- oder Kühlanlage bereitstellen.

Wenn der MK-RL bevorzugt auch parallel mit dem zweiten Anschluss verbunden ist, dann lässt sich vorteilhaft zumindest ein weiterer Mischzustand erzeugen.

"Vorlauf" ist bei Wärmesenken, wenn nichts anderes angegeben ist, derjenige Anschluss, dem warmes Wärmeträgermedium zugeführt wird. Bei Wärmequellen ist es derjenige Anschluss, aus dem das warme Wärmeträgermedium entnommen wird.

In einer besonders bevorzugten Weiterbildung sind dann zumindest sechs Betriebszustände über das Mehrwegmischventil einstellbar:
a) Verbinden des vierten Anschlusses mit dem fünften,
b) gleichzeitige Verbindung des vierten Anschlusses mit dem fünften Anschluss und des zweiten Anschlusses mit dem fünften Anschluss,
c) Verbinden des zweiten Anschlusses mit dem fünften Anschluss,
d) gleichzeitiges Verbinden des zweiten Anschlusses mit dem fünften Anschluss und des ersten Anschlusses mit dem fünften Anschluss,
e) Verbinden des ersten Anschlusses mit dem fünften Anschluss und
f) Verbinden des ersten Anschlusses mit dem dritten Anschluss des Mehrwegemischventils.

In diesem Fall ist es besonders zweckmäßig, wenn die Heizungsanlage angepasst ist,
- Betriebszustand a) einzustellen, wenn keine Wärmeanforderung an den Pufferkreis und/oder keine Wärmeanforderung an die Heizquelle aus dem gemischten Heizkreis bestehen,
- Betriebszustand b) einzustellen, wenn eine Wärmeanforderung an den gemischten Heizkreis besteht, die aus dem Pufferkreis befriedigt werden kann, und die PK-RL1-Temperatur größer der MK-VL-Temperatur ist,
- Betriebszustand c) einzustellen, wenn eine Wärmeanforderung an den gemischten Heizkreis besteht, die aus dem Pufferkreis befriedigt werden kann, und die PK-RL1-Temperatur gleich der MK-VL-Temperatur ist,
- Betriebszustand d) einzustellen, wenn eine Wärmeanforderung an den gemischten Heizkreis besteht, die aus dem Heizquellenkreis befriedigt werden soll, und die HK-VL-Temperatur größer der MK-VL-Temperatur ist,
- Betriebszustand e) einzustellen, wenn eine Wärmeanforderung an den gemischten Heizkreis besteht, die aus dem Heizquellenkreis befriedigt werden soll, und die HK-VL-Temperatur gleich der MK-VL-Temperatur ist (in diesem Fall wird der Heizquellenheizkreis gleitend am Bedarf des gemischten Heizkreises gefahren) und
- Betriebszustand f) einzustellen, wenn der Pufferkreis mit Wärme aus dem Heizquellenkreis in Vorrangschaltung versorgt werden soll.

Zweckmäßig ist eine stromaufwärts sperrende Rückflusssperre zwischen MK-RL und HK-RL angeordnet, die bevorzugt zwischen dem vierten Anschluss und der Verbindung zwischen HK-RL und PK-RL2 angeordnet ist und/oder eine stromaufwärts sperrende Rückflusssperre ist zwischen PK-RL1 und HK-RL angeordnet, die bevorzugt stromaufwärts eines Knotens zwischen dem zweiten Anschluss, dem PK-RL1 und dem HK-RL angeordnet ist und/oder ein Überströmventil ist zwischen MK-RL und dem zweiten Anschluss angeordnet. Dadurch werden unerwünschte Wärmeträgermedienmischungen verhindert. Um den hydraulischen Abgleich zu erleichtern und die Anwendung zusätzlich zu verbessern kann vorgesehen sein, dass das Überströmventil einen motorischen Antrieb besitzt, der ansteuerbar ist.

Wenn nichts anderes angegeben ist, bedeutet im Rahmen der vorliegenden Erfindung die Wendung dass "etwas zwischen zwei Elementen angeordnet" ist, dass diese beiden Elemente in fluider Verbindung stehen bzw. stehen können. Dabei muss das zwischen geordnete Element hydraulisch nicht unmittelbar die beiden Elemente angrenzen, sondern es können weitere Element dazwischen angeordnet sein.

Wenn eine zweite Umwälzpumpe im MK, insbesondere zwischen dem fünften Anschluss und dem MK-VL angeordnet ist und/oder eine dritte Umwälzpumpe im HK, insbesondere zwischen dem HK-RL und einem Knoten zwischen dem MK-RL und PK-RL1 angeordnet ist, dann kann der konstruktive Aufwand weiter verringert werden, weil nur eine sehr geringe Anzahl an Umwälzpumpen notwendig ist

Wenn ein erster Temperatursensor im MK-VL angeordnet ist, der mit einer Steuer- und Regeleinheit der Heizungsanlage gekoppelt ist und/oder ein zweiter Temperatursensor an dem Pufferspeicher und/oder im Rücklauf des Pufferspeichers angeordnet ist, der mit der Steuer- und Regeleinheit der Heizungs- oder Kühlanlage gekoppelt ist und/oder ein dritter Temperatursensor im PK-RL1 angeordnet ist, der mit der Steuer- und Regeleinheit der Heizungs- oder Kühlanlage gekoppelt ist, dann kann der steuerungstechnische Aufwand klein gehalten werden, weil über die Erfassung dieser Parameter alle gewünschten Mischzustände regelbar sind und optional auch die Leistungen der Umwälzpumpen 139 und 141. Außerdem sollte auch ein Temperatursensor im Heizquellen kreisvorlauf vorgesehen sein.

Vorzugsweise weist die Verteilvorrichtung weiterhin ein oder mehrere der auf die Verteilvorrichtung bezogenen Merkmale der erfindungsgemäßen mehrkreisigen Heizungs- oder Kühlanlage auf.

Weiterhin wird unabhängiger Schutz beansprucht für das erfindungsgemäße Verfahren zum Betreiben einer mehrkreisigen Heizungs- oder Kühlanlage mit zumindest einem Heizquellenheizkreis, zumindest einem gemischten Heizkreis und zumindest einem Pufferkreis, die insbesondere als die erfindungsgemäße mehrkreisige Heizungs- oder Kühlanlage ausgebildet ist, wobei sich das Verfahren dadurch auszeichnet, dass in:
- einem ersten Betriebszustand der gemischte Heizkreis ohne äußere Wärmezufuhr betrieben wird,
- in einem zweiten Betriebszustand der gemischte Heizkreis aus dem Pufferkreis mit Wärme versorgt wird, wobei dem Vorlauf des gemischten Heizkreises Wärmeträgermedium aus dem Rücklauf des gemischten Heizkreises zugemischt wird,
- in einem dritten Betriebszustand der gemischte Heizkreis aus dem Pufferkreis mit Wärme versorgt wird, ohne dass dem Vorlauf des gemischten Heizkreises Wärmeträgermedium aus dem Rücklauf des gemischten Heizkreises zugemischt wird,
- in einem vierten Betriebszustand der gemischte Heizkreis aus dem Heizquellenheizkreis mit Wärme versorgt wird, wobei dem Vorlauf des gemischten Heizkreises Wärmeträgermedium aus dem ersten Rücklauf des Pufferkreises zugemischt wird,
- in einem fünften Betriebszustand der gemischte Heizkreis aus dem Heizquellenheizkreis mit Wärme versorgt wird, ohne dass dem Vorlauf des gemischten Heizkreises Wärmeträgermedium aus dem Rücklauf des gemischten Heizkreises zugemischt wird, wobei die Heizquelle bevorzugt gleitend am Bedarf des gemischten Heizkreises gefahren wird, und
- in einem sechsten Betriebszustand nur der Pufferkreis aus dem Heizquellenheizkreis mit Wärme versorgt wird,
wobei bevorzugt vorgesehen ist, dass der Pufferkreis mit einer Trinkwarmwasseraufbereitung verbunden ist und/oder dass der Pufferkreis mit zumindest einer weiteren Wärmequelle, insbesondere einer Solarthermiequelle verbunden ist.

Die Kennzeichen der vorliegenden Erfindung und weitere Vorteile werden im Folgenden anhand der Beschreibung eines bevorzugten Ausführungsbeispiels im Zusammenhang mit den Figuren deutlich werden. Dabei zeigen:

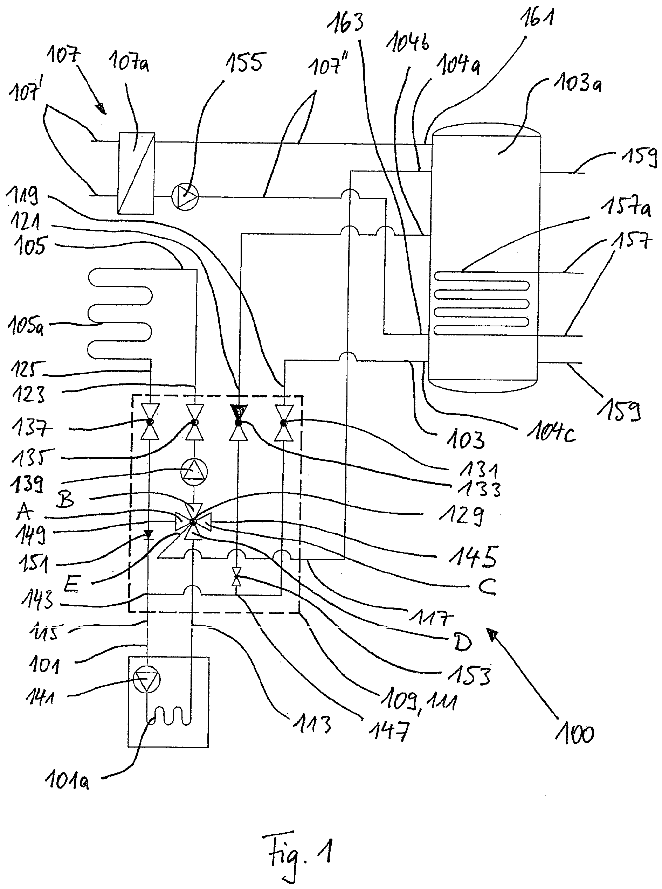

- Fig. 1: die erfindungsgemäße mehrkreisige Heizungsanlage in einer Blockbilddarstellung,
- Fig. 2a bis 2f: verschiedene Mischzustände der erfinderischgemäßen mehrkreisigen Heizungsanlage nach Fig. 1,
- Fig. 3: eine Gegenüberstellung der erfindungsgemäßen mehrkreisigen Heizungsanlage und einer mehrkreisigen Heizungsanlage in einer Vergleichsvariante,
- Fig. 4: das in der mehrkreisigen Heizungsanlage nach Fig.1 bis Fig. 3 eingesetzte Fünfwegemischventil in einer perspektivischen Gesamtansicht,
- Fig. 5a bis 5d: das Fünfwegemischventil nach Fig. 4 in verschiedenen teiltransparenten perspektivischen Ansichten,
- Fig. 6: das Fünfwegemischventil nach Fig. 4 in einer Schnittansicht und
- Fig. 7a, 7b: das erfindungsgemäße Mehrwegemischventil nach Fig. 4 in einer teilweisen Explosionsdarstellung, und zwar in einer perspektivischen Ansicht und einer Draufsicht.

Die erfindungsgemäße mehrkreisige Heizungsanlage 100 weist einen Heizquellenheizkreis 101 mit einer Heizquelle 101a, einen Pufferkreis 103 mit einem Pufferspeicher 103a und einen gemischten Heizkreis 105 mit einer Fußbodenheizung 105a auf. Der Pufferspeicher 103a und die Fußbodenheizung 105a bilden somit zwei unterschiedliche Wärmesenken 103a, 105a. Der Pufferspeicher 103a ist dabei mit einer Trinkwarmwasseraufbereitung 107 mit einem Wärmeübertrager 107a verbunden und weist einen Vorlauf 104a, sowie einen ersten etwa mittig angeordneten Rücklauf 104b und einen zweiten am Boden des Pufferspeichers 103a angeordneten Rücklauf 104c auf.

Die Trinkwarmwasseraufbereitung 107 weist einen Trinkwarmwasserkreislauf 107' und einen Brauchheizwasserkreislauf 107" auf. Da die Trinkwarmwasseraufbereitung 107 wesentlich höhere Temperaturen benötigt als der gemischte Heizkreis 105, ist der Vorlauf 161 des Brauchheizwasserkreislaufes 107" am oberen Ende des Pufferspeichers 103a angeordnet und der Rücklauf 163 des Brauchheizwasserkreises 107" zwischen dem ersten Rücklauf 104b und dem zweiten Rücklauf 104c des Pufferspeichers. Somit liegen die Anschlüsse für den Vorlauf 161 des Brauchheizwasserkreises 107", den Vorlauf 104a und den ersten Rücklauf 104b des Pufferspeichers 103a, den Rücklauf 163 des Brauchheizwasserkreises 107" und den zweiten Rücklauf 104c des Pufferspeichers 103a in unterschiedlichen Zonen des Pufferspeichers 103a mit in dieser Reihenfolge fallenden Temperaturniveaus, wenn der Pufferspeicher 103a nicht vollständig abgekühlt und aufgeheizt ist, so dass dann einheitliche Temperaturen über den gesamten Pufferspeicher 103a vorliegen würden.

Weiterhin kann die mehrkreisige Heizungsanlage 100 mit einer Einrichtung 109 zum Steuern und/oder Regeln versehen werden, die aber nicht Teil dieser Erfindung ist. Die Einrichtung 109 zum Steuern und/oder Regeln weist eine Verteilvorrichtung 111 mit sieben Verteileranschlüssen 113, 115, 117, 119, 121, 123, 125 auf, die jeweils paarweise der Wärmequelle 101a und den zwei Wärmesenken 103a, 105a zugeordnet sind, wobei dem Pufferspeicher 103a insgesamt drei Verteileranschlüsse 117, 119, 121 zugeordnet sind. Die Verteilvorrichtung 111 beinhaltet ein Fünfwegemischventil 129, das fünf Anschlüsse A, B, C, D, E aufweist. Weiterhin weist die Verteilvorrichtung 111 vier Absperrventile 131, 133, 135, 137 auf, die den Vorläufen und Rückläufen des Pufferkreises 103 und des gemischten Heizkreises 105 zugeordnet sind. Dabei ist das Absperrventil 133 als stromaufwärts, also in Richtung vom Fünfwegmischventil 129 weg wirkende Rückflusssperre ausgebildet.

Zwischen dem Fünfwegemischventil 129 und dem Absperrventil 135 ist im Vorlauf des gemischten Heizkreises 105 eine Umwälzpumpe 139 vorgesehen. Eine weitere Umwälzpumpe 141 befindet sich im Rücklauf des Heizquellenheizkreises 101 im Wesentlichen direkt vor der Wärmequelle 101a.

Die Verteilvorrichtung 111 weist hydraulische Verbindungselemente auf, die teilweise über hydraulische Knoten 143, 145, 147, 149 miteinander verbunden sind. Zwischen den hydraulischen Knoten 143, 149 ist in Bezug auf den Rücklauf des Heizquellenheizkreises 101 eine stromaufwärts wirkende weitere Rückflusssperre 151 vorgesehen.

In der Verbindungsleitung zwischen den Knotenpunkten 145, 147, also in der Verbindung des Rücklaufs des gemischten Heizkreises 105 mit dem Anschluss C des Fünfwegemischventils 129 ist ein Überströmventil 153 angeordnet, dass mit einer Federkraft beaufschlagt ist und stromabwärts sperrt. Dadurch wird ein Überströmen von Energie transportierendem Medium vom ersten Rücklauf 104b des Pufferspeichers 103a in den Rücklauf des Heizquellenkreises 101, in den Rücklauf des gemischten Heizkreises 105 und in den zweiten Rücklauf 104c des Pufferspeichers 103a verhindert, jedoch das Überströmen von Energie transportierendem Medium vom Rücklauf des gemischten Heizkreises 105 zum Anschluss C des Fünfwegemischventils 129 ermöglicht. Diese Verbindung zwischen den Knotenpunkten 145, 147 könnte auch wegfallen, wobei den zumindest ein Mischzustand entfallen würde, wie weiter deutlich werden wird.

Der Brauchheizwasserkreis 107" der Trinkwarmwasserbereitung 107 wird mittels der Umwälzpumpe 155 betrieben, wobei eine Entkopplung des Brauchheizwasserkreises 107" von dem Trinkwarmwasserkreis 107' über den Wärmeübertrager 107a erfolgt.

In den Pufferspeicher 103a sind zwei Solarthermieheizkreise 157, 159 eingebunden. Am Beispiel des ersten Solarthermieheizkreises 157 ist gezeigt, wie eine Medientrennung zwischen dem im Pufferspeicher 103a gespeicherten Energie transportierendem Medium und dem im Solarthermieheizkreis 157 befindlichen Energie transportierendem Medium mittels eines Wärmeübertragers 157a erfolgt. Hierbei ist im Solarthermieheizkreis 157 noch eine eigene Umwälzpumpe (nicht gezeigt) vorgesehen. Alternativ ist mit dem zweiten Solarthermieheizkreis 159 gezeigt, dass es auch möglich ist, den Solarthermieheizkreis 159 direkt in den Medienkreislauf der erfindungsgemäßen Heizungsanlage 100 einzubinden. Auch hier sollte eine eigene Umwälzpumpe (nicht gezeigt) und ggf. ein externer Wärmeübertrager in diesem Solarthermieheizkreis 159 vorgesehen werden. Beide Solarthermieheizkreise 157, 159 weisen solarthermische Kollektoren (nicht gezeigt) mit oder ohne Konzentration der Strahlung zur Anhebung der Temperatur im Solarthermieheizkreis 157, 159 auf, wie sie dem Fachmann allgemein geläufig sind.

Die hydraulische Verbindung innerhalb der Verteilvorrichtung 111 ist nun wie folgt ausgeführt. Anschluss A des Fünfwegemischventils 129 ist über den Knotenpunkt 149 und den Verteileranschluss 125 mit dem Rücklauf des gemischten Heizkreises 105 verbunden. Anschluss B ist über die Umwälzpumpe 139 und den Verteileranschluss 123 mit dem Vorlauf des gemischten Heizkreises 105 verbunden. Anschluss C ist über den Knotenpunkt 145 zum einen über den Verteileranschluss 121 mit dem ersten Rücklauf 104b des Pufferspeichers 103a verbunden, zum anderen parallel dazu über das Überströmventil 153, die Knotenpunkte 143, 147, die Rückflusssperre und den Verteileranschluss 125 mit dem Rücklauf des gemischten Heizkreises 105. Anschluss D ist über den Verteileranschluss 113 mit dem Vorlauf des Heizquellenheizkreises 101 verbunden. Anschluss E ist über Verteileranschluss 117 mit dem Vorlauf 104a des Pufferspeichers 103a verbunden. Schließlich ist der Rücklauf des gemischten Heizkreises 105 über Verteileranschluss 125, Knotenpunkt 149, Rückflusssperre 151, Knotenpunkt 143 und Verteileranschluss 115 mit dem Rücklauf des Heizquellenheizkreises 101 verbunden.

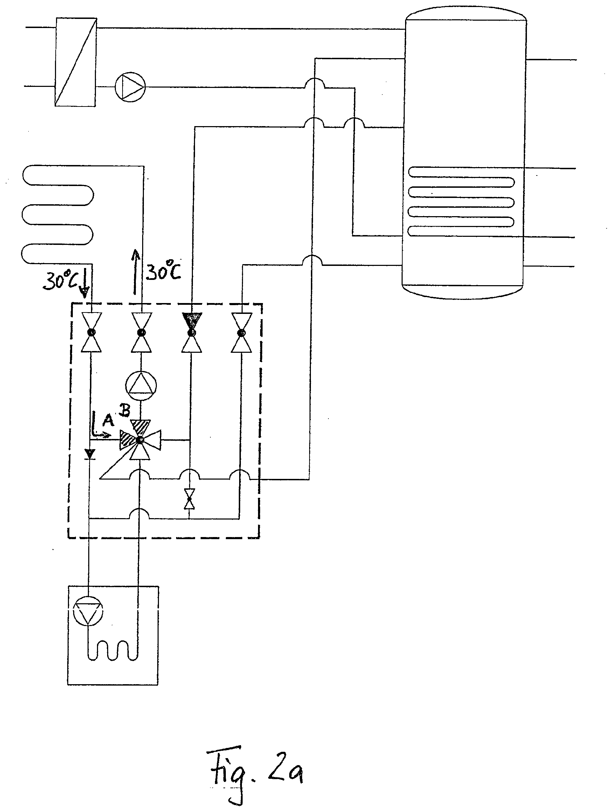

In Fig. 2a bis 2f sind die verschiedenen verwendeten Mischzustände a) bis f) gezeigt, die für die erfindungsgemäße mehrkreisige Heizungsanlage 100 bevorzugt einstellbar sind. Dabei verdeutlichen die Pfeile den Fluss des Wärmeträgermediums, wobei die dreifach gefiederten Pfeile heißes Wärmeträgermedium aus der Heizquelle 101a bzw. den Pufferspeicher 103a, die doppelt gefiederte Pfeile mittelwarmes Wärmeträgermedium und die einfach gefiederten Pfeile ausgekühltes Wärmeträgermedium zeigen, wobei dies nur symbolisch zu verstehen ist. Zusätzlich sind die einzelnen Temperaturen beispielhaft angegeben und mittels einer Schraffur sind miteinander kommunizierende Anschlüsse A, B, C, D, E, des Fünfwegemischventils 129 verdeutlicht.

In dem in Fig. 2a dargestellten Mischzustand a) ist das Mehrwegemischventil 129 so eingestellt, dass die Anschlüsse A, B miteinander kommunizieren und die restlichen Anschlüsse C, D, E gesperrt sind. Dann strömt Wärmeträgermedium von Anschluss A nach Anschluss B und der gemischte Heizkreis 105 bildet einen geschlossenen hydraulischen Kreis, dem kein Wärmeträgermedium von außen zugeführt wird, und der ggf. mittels der Umwälzpumpe 139 sukzessive umgewälzt und ausgekühlt wird. Dieser Mischzustand a) wird verwendet, wenn keine Wärmeanforderung an den gemischten Heizkreis 105 besteht. Für den Brauchheizwasserkreis 107" kann eine Wärmeanforderung über den Trinkwarmwasseraufbereiter 107 bestehen.

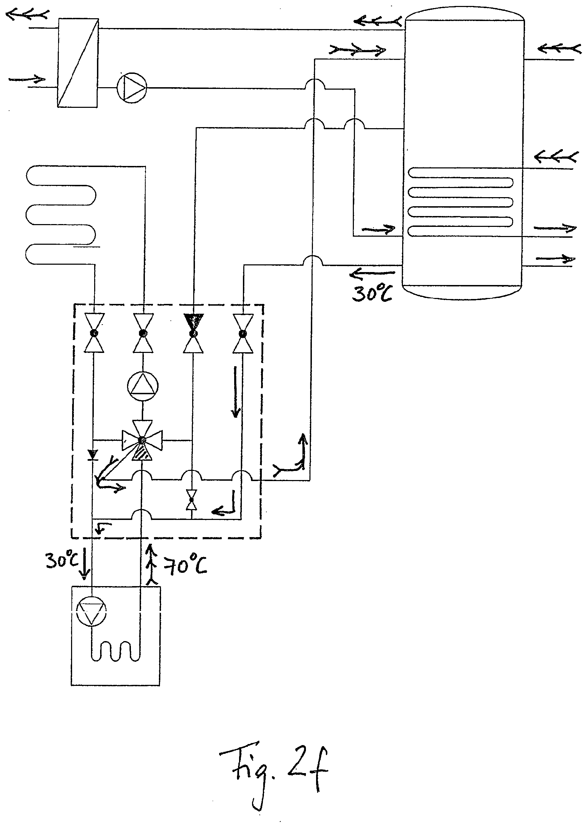

Diese Wärmeanforderung über den Trinkwarmwasseraufbereiter 107 kann grundsätzlich in jedem der nachfolgend dargestellten Mischzustände bestehen, wobei dann bei ausreichender Wärmebeladung des Pufferspeichers 103a dieser Wärmebedarf direkt aus dem Pufferspeicher 103a befriedigt werden kann. Falls die Wärmebeladung nicht ausreicht und/oder eine zusätzliche Wärmebeladung erfolgen soll, kann dem Pufferspeicher 103a zusätzlich Wärme über die Solarthermieheizkreis 157, 159 zugeführt werden, wie im Zusammenhang mit Fig. 2f noch beschrieben werden wird.

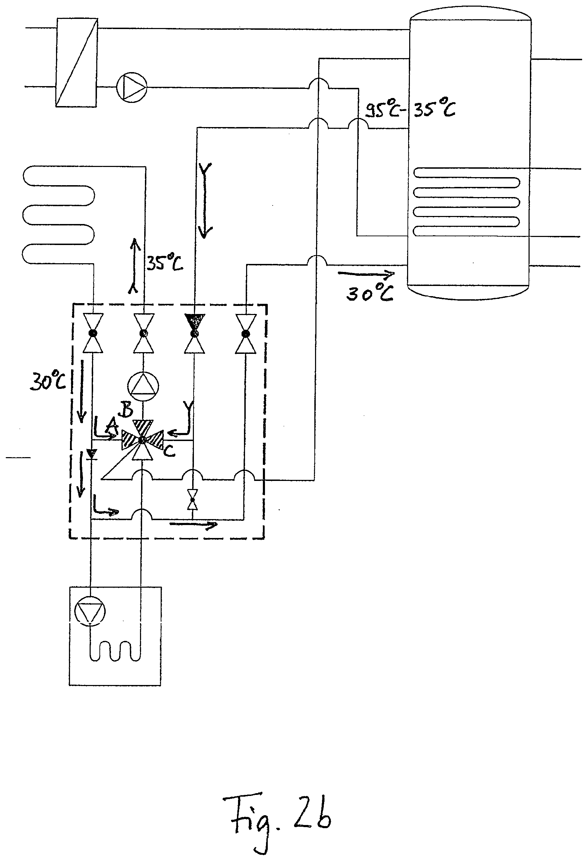

Im in Fig. 2b dargestellten Mischzustand b) stehen die Anschlüsse A, B und C miteinander in fluider Kommunikation, so dass Wärmeträgermedium von Anschluss A nach Anschluss B strömen und zusätzlich Anschluss B auch von Anschluss C Wärmeträgermedium zugeführt wird. Der Medienstrom an Anschluss B ist somit die Summe der Medienströme aus den Anschlüssen A und C, es wird also dem gemischten Heizkreis 105 sukzessive Wärmeträgermedium aus dem Pufferkreis 103 zugeführt, wodurch eine externe Medienzumischung erfolgt. Dieser Mischzustand b) wird eingesetzt, wenn es eine Wärmeanforderung in dem gemischten Heizkreis 105 gibt und wenn die Rücklauftemperatur des Pufferkreises 103 größer ist als die Vorlauflauftemperatur des gemischten Heizkreises 105. Wie aus den Pfeildarstellungen zu erkennen ist, wird hier das Wärmeträgermedium aus dem ersten Rücklauf 104b des Pufferspeichers 103a Anschluss C zugeführt und Medium aus dem Rücklauf des gemischten Heizkreises 105 wird dem zweiten Rücklauf 104c des Pufferspeichers 103a zugeführt, so dass in diesem Fall der zweite Rücklauf 104c als Vorlauf des Pufferspeichers 103a dient, so dass also der Pufferspeicher 103a sukzessive entladen wird.

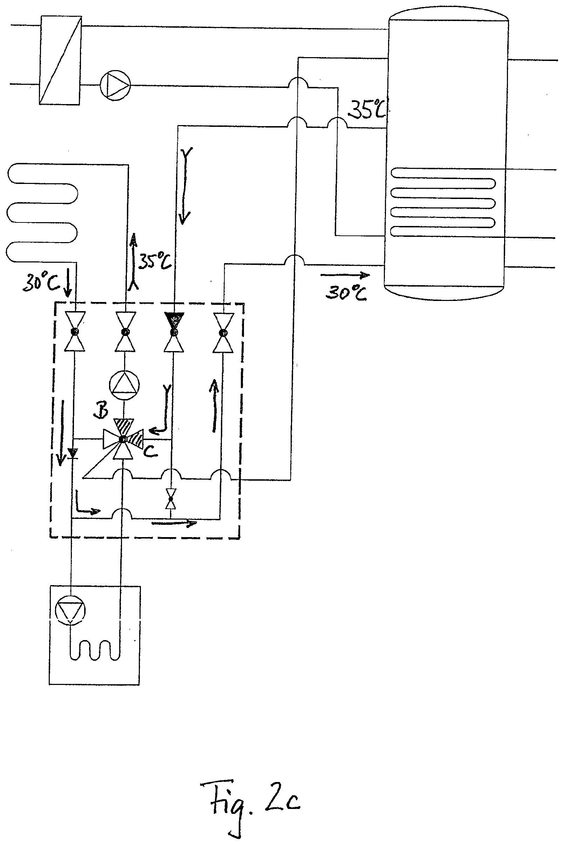

Im in Fig. 2c gezeigten Mischzustand c) stehen nur die Anschlüsse B und C in fluider Kommunikation, wodurch Wärmeträgermedium von Anschluss C nach Anschluss B strömt. Hier wird also dem Anschluss B Wärmemedium aus dem ersten Rücklauf 104b des Pufferspeichers 103a über Knotenpunkt 145 zugeführt. Dieser Mischzustand c) wird gewählt, wenn es eine Wärmeanforderung in dem gemischten Heizkreis 105 gibt und wenn die Rücklauftemperatur des Pufferspeichers 103a mit der Vorlauftemperatur des gemischten Heizkreises 105 übereinstimmt. In diesem Fall wird das Wärmeträgermedium im ersten Rücklauf 104b des Pufferspeichers 103a vollständig im gemischten Heizkreis 105 weiter ausgekühlt und dem zweiten Rücklauf 104c des Pufferspeichers 103a sämtliches Medium aus dem Rücklauf des gemischten Heizkreises 105 über die Knotenpunkte 143, 147 zugeführt. Da der Druckverlust über den Pufferkreis 103 in der Praxis sehr gering ist, wird das Wärmemedium den Weg über den Pufferkreis 103 nehmen. Das Überströmventil 153 dient dabei nur als optionales Hilfsorgan für den hydraulischen Abgleich und wird individuell entsprechend den hydraulischen Verhältnissen in der mehrkreisigen Heizanlage 100 abgeglichen, wie es beispielsweise für Heizkörperventile gängige Praxis ist.

In den Mischzuständen b) und c) wird der gemischte Heizkreis 105 somit mit Wärme aus dem Pufferspeicher 103a versorgt, wobei die Temperatur des aus dem ersten Rücklauf 104b des Pufferspeichers 103a entnommenen Mediums zwischen 30°C und 95°C betragen kann. Je nach Höhe dieser entnommenen Temperatur wird der geeignete Mischzustand gewählt. Hierzu ist ein Temperatursensor (nicht gezeigt) zur Bestimmung der Medientemperatur im ersten Rücklauf 104b vorgesehen, der entweder direkt im Pufferspeicher 103a und/oder im ersten Rücklauf 104b angeordnet ist. Außerdem ist ein weiterer Temperatursensor (nicht gezeigt) im Vorlauf des gemischten Heizkreises 105 angeordnet. Außerdem ist auch ein Temperatursensor (nicht gezeigt) im Vorlauf des Heizquellenkreises 101 angeordnet. Die Temperatursensoren kommunizieren mit der Einrichtung 109 zum Steuern und/oder Regeln, die in diesem Fall die Stellung des Fünfwegemischventils 129 und optional die Leistung der Umwälzpumpen 139 und 141 steuert.

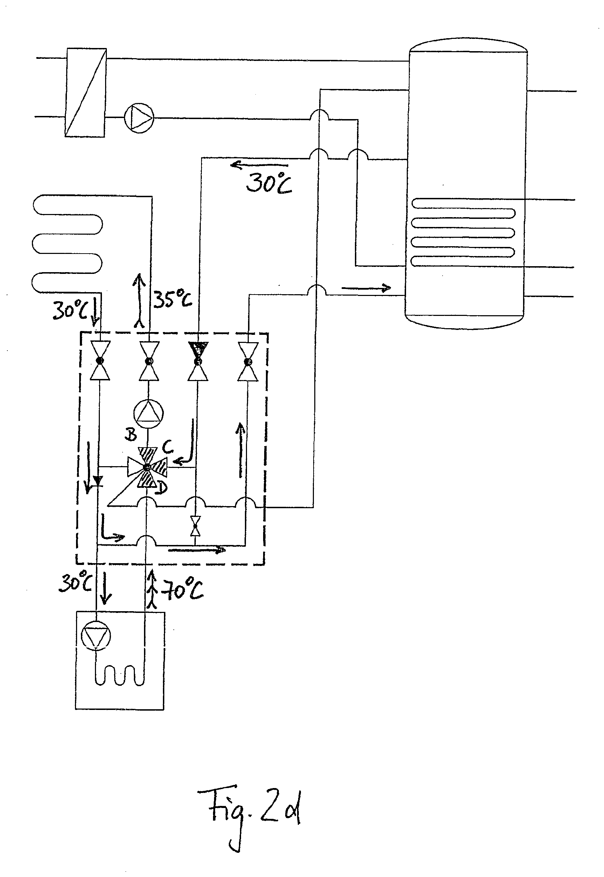

Im in Fig. 2d gezeigten Mischzustand d) befinden sich die Anschlüsse B, C, und D in fluider Kommunikation untereinander. In diesem Fall strömt Wärmeträgermedium von Anschluss C nach Anschluss B und auch von Anschluss D nach Anschluss B. Bei Anschluss B ergibt sich also eine Mischmenge aus den zugespeisten Medienströmen der Anschlüsse C und D. In diesem Mischzustand gibt es Wärmeanforderung in dem gemischten Heizkreis 105 und die Wärmebeladung des Pufferspeichers 103a reicht nicht, diese Wärmeanforderung zu bedienen, Dabei ist die Vorlauftemperatur des Heizquellenkreises 101 größer als die Vorlauftemperatur des gemischten Heizkreises 105, so dass schon ausgekühltes Wärmeträgermedium aus dem ersten Rücklauf 104b des Pufferkreises 103 über den Knotenpunkt 145 und Anschluss C dem Vorlauf des gemischten Heizkreises 104 zusätzlich zur Abkühlung des über den Anschluss D zugeführten Wärmeträgermediums aus dem Heizquellenkreis 101 beigemischt wird.

In diesem Mischzustand d) erfolgt eine Unterstützung des Wärmemedientransports durch die Umwälzpumpe 141 im Heizquellenkreis 101.

Dieser Mischzustand d) wird nur dann sinnvoll verwendet, wenn der Pufferspeicher 103a am ersten Rücklauf 104b tatsächlich eine geringere Temperatur aufweist als die Vorlauftemperatur des gemischten Heizkreises 105.

Allgemein ist festzuhalten, dass das Überströmventil 153 dem hydraulischen Abgleich dient. Je nach Einstellung des Überströmventils 153 wird mehr oder weniger Wärmeträgermedium den Weg über den Pufferkreis 103 nehmen und stattdessen von Knotenpunkt 143 über Knotenpunkt 145 nach Anschluss C geführt. Genauer gesagt ist der hydraulische Widerstand des hydraulischen Pfades über den Pufferspeicher 103a wesentlich höher als der des hydraulischen Pfades von Knotenpunkt 143 über Knotenpunkt 145 nach Anschluss C, da der erstgenannte hydraulische Pfad zum einen länger ist und zum anderem im Pufferspeicher 103a die Wassersäule als zusätzlicher hydraulischer Widerstand wirkt. Um zu verhindern, dass der zweitgenannte Pfad ungewünscht vom Wärmeträgermedium durchlaufen wird, muss daher der hydraulische Widerstand des Überströmventils 153 größer als der hydraulische Widerstand des Pufferkreises 103 eingestellt sein.

Um hier den hydraulischen Abgleich zu erleichtern und die Anwendung zusätzlich zu verbessern kann vorgesehen sein, dass das Überströmventil 153 einen motorischen Antrieb (nicht gezeigt) besitzt, der ansteuerbar ist.

Alternativ (nicht gezeigt) könnte natürlich auch dieses Überströmventil 153 zusammen mit der hydraulischen Verbindungsleitung zwischen Knotenpunkt 145 und der Leitung zwischen dem zweiten Rücklauf 104c des Pufferkreises 103 und dem Knotenpunkt 143 weggelassen werden, wonach in den Mischzuständen b), c) und d) das Wärmeträgermedium aus dem MK-RL, also Verteileranschluss 125, immer über den Pufferkreis 103 strömen muss.

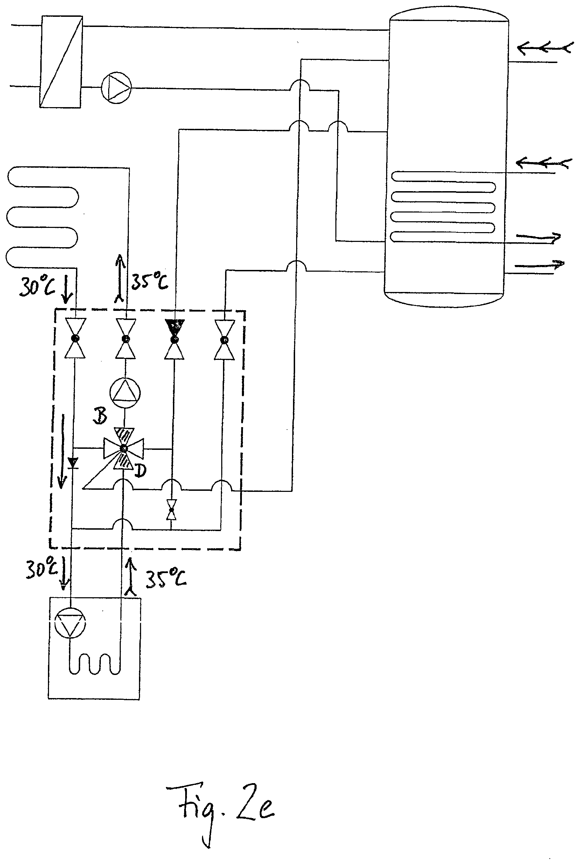

In dem in Fig. 2e gezeigten Mischzustand e) sind nur die Anschlüsse B und D miteinander verschaltet, während die Anschlüsse A, C und E geschlossen sind. In diesem Fall strömt das Wärmeträgermedium von Anschluss D zu Anschluss B, d. h. der gemischte Heizkreis 105 wird ausschließlich über die Heizquelle 101a versorgt, die gleitend am Bedarf des gemischten Heizkreises 105 gefahren wird. Hierbei ist die Vorlauftemperatur des gemischten Heizkreises 105 gleich der Vorlauftemperatur des Heizquellenheizkreises 101. Dieser Mischzustand e) wird beispielsweise gewählt, wenn durch aktuelle Beladung mittels der Solarthermieheizkreise 157, 159 eine ausreichende Wärmebeladung des Pufferspeichers 103a sichergestellt werden kann, so dass bei einer Wärmeanforderung an den Pufferspeicher 103a durch die Trinkwarmwasserbereiter 107 keine Beladung des Pufferspeichers 103a über den Heizquellenheizkreis 101 erforderlich ist und die Heizquelle 101a daher in einem abgesenkten Betrieb gefahren werden kann.

In dem in Fig. 2f gezeigten Mischzustand f) besteht eine direkte fluide Kommunikation zwischen den Anschlüssen D und E, so dass Wärmeträgermedium von Anschluss D nach Anschluss E strömt. Hierdurch kann eine Vorrangschaltung der Beladung des Pufferspeichers 103a aus dem Heizquellenheizkreis 101 verwirklicht werden. Dies wird dann eingesetzt, wenn die Temperatur im Pufferspeicher 103a unter einen vorbestimmten Wert gefallen ist und/oder aktuell eine große Trinkwarmwasseranforderung in dem Trinkwarmwasseraufbereiter 107 besteht, die dann vorrangig unter zusätzlichem Auffüllen des Pufferspeichers 103a bedient wird. Im Bedarfsfall kann dem Pufferspeicher 103a durch die zumindest einen Solarthermieheizkreis 157, 159 weitere Wärme zugeführt werden, so dass die Temperatur des Pufferspeichers 103a auf bis zu 95°C angehoben werden kann, obwohl die Heizquelle 101a beispielweise nur Medientemperaturen bis 70°C bereit stellt.

Insgesamt ist es also mit den erzeugbaren Mischzuständen möglich, den gemischten Heizkreis 105 wahlweise mit Wärme aus der Heizquelle 101a oder dem Pufferspeicher 103a zu versorgen. Anstelle eines üblichen Heizbrenners kann natürlich als Heizquelle 101a auch eine weitere regenerative Wärmeerzeugung verwendet werden.

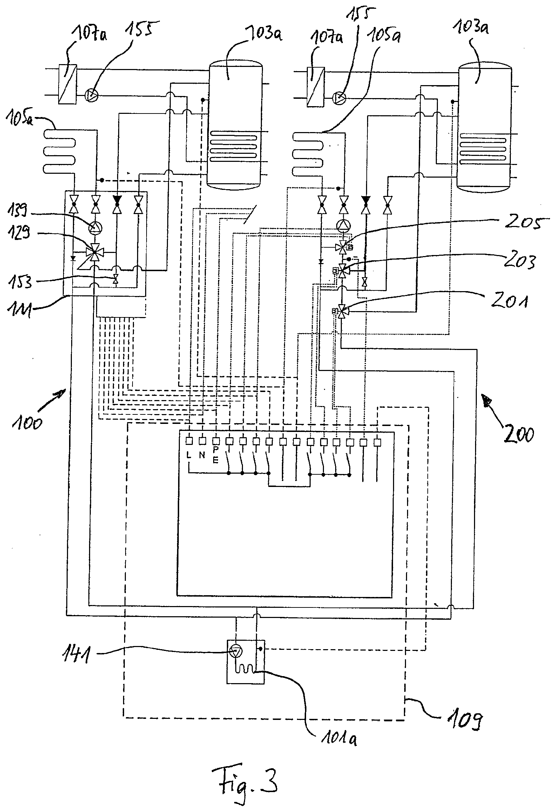

In Fig. 3 ist eine Gegenüberstellung gezeigt zwischen der erfindungsgemäßen mehrkreisigen Heizungs- und Kühlanlage 100 und einer mehrkreisigen Heizungs- und Kühlanlage 200, mit der dieselben Funktionen, d. h. die Mischzustände a) bis f) verwirklicht werden können. Es ist zu erkennen, dass die alternative Ausgestaltung ohne Fünfwegemischventil 129 ein Umschaltventil 201 und zwei Dreiwegemischventil 203, 205 sowie entsprechende umfangreiche Steuer- und Regeltechnik erforderlich macht.

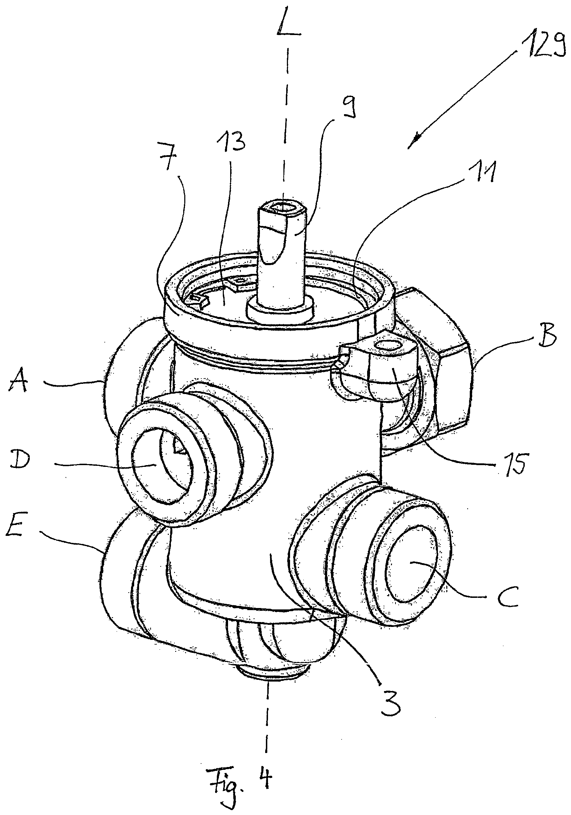

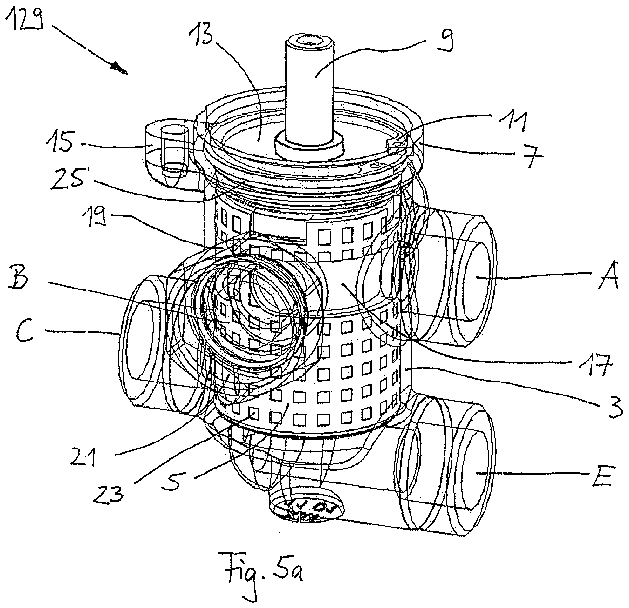

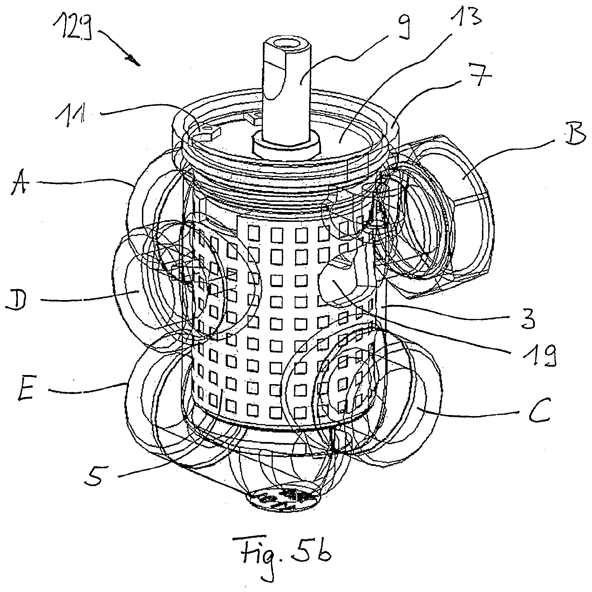

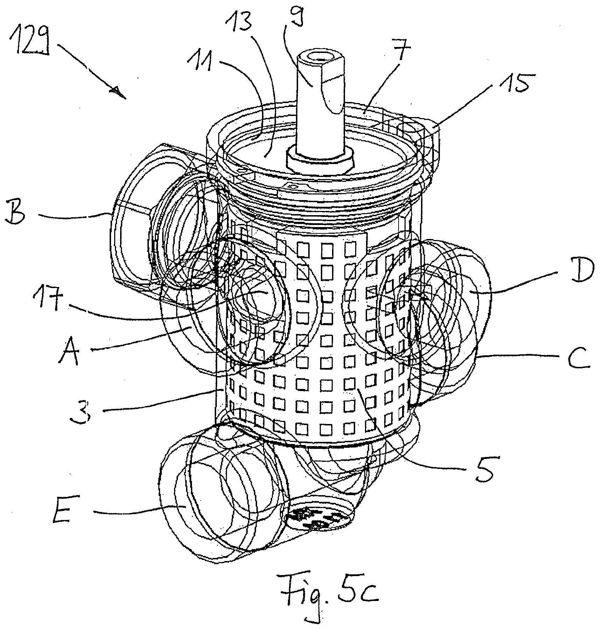

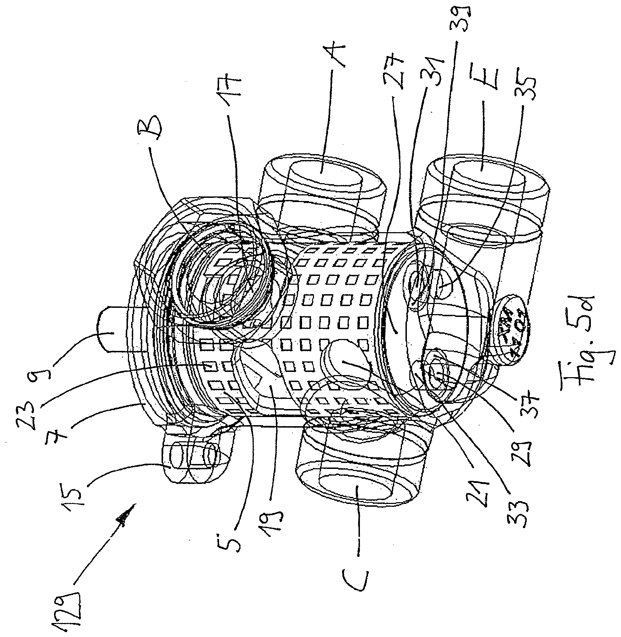

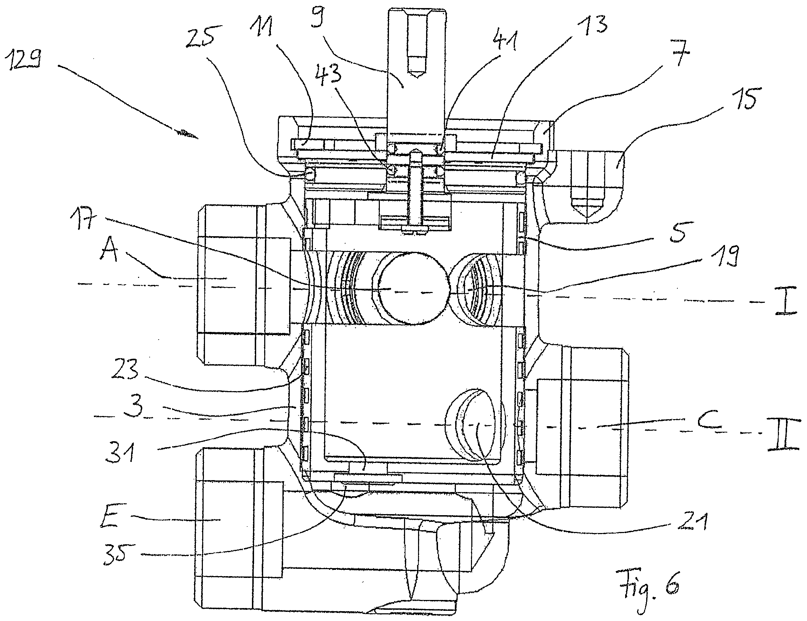

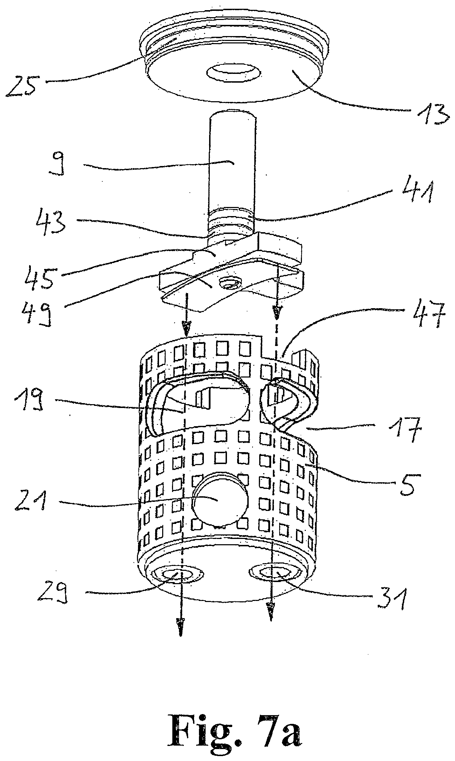

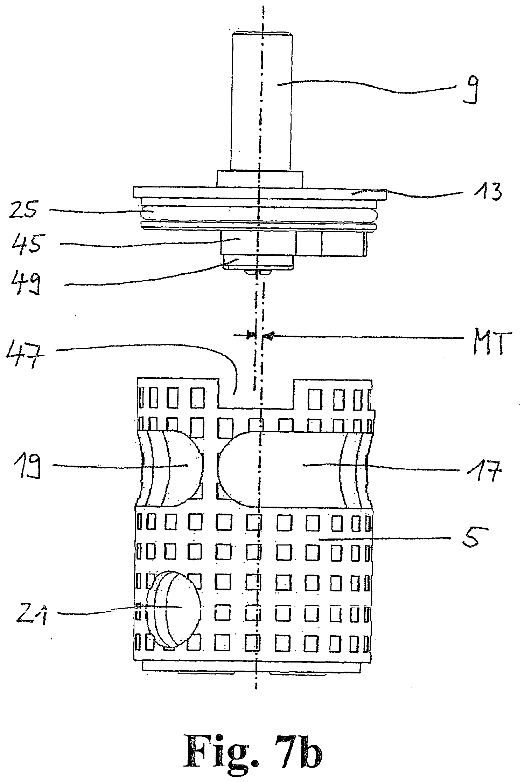

In den Fig. 4 bis Fig. 6 und 7a, 7b ist eine bevorzugte Ausgestaltung des erfindungsgemäßen Mehrwegemischventils 129 dargestellt, wobei Fig. 4 eine perspektivische Gesamtschau zeigt, die Fig. 5a bis 5d teiltransparente perspektivische Darstellungen zeigen und in Fig. 6 eine Querschnittsansicht gezeigt ist. In Fig. 7a, 7b ist eine Explosionsdarstellung für das Zusammenwirken bestimmter Teil gezeigt.

Es ist zu erkennen, dass das Mehrwegemischventil 129 ein im Wesentlichen hohlzylindrisch ausgebildetes Gehäuse 3 aufweist, an dem fünf verschiedene Anschlüsse A, B, C, D, E angeordnet sind. Im Inneren des Gehäuses 3 ist ein Schaltelement 5 vorgesehen, das ebenfalls hohlzylindrisch ausgebildet ist. An dem Gehäuse 3 ist ein Kragen 7 vorgesehen, an dem ein mittels eines Sprengringes 11 gehaltenes Abdeckelement 13 angeordnet ist, wobei durch das Abdeckelement 13 eine Antriebswelle 9 zur Betätigung des Schaltelementes 5 durchgeführt ist. Das Gehäuse 3 weist außerdem eine auskragend angeordnete Schraubverbindungsaufnahme 15 auf, an der die Verdrehsicherung (nicht gezeigt) eines mit der Antriebswelle 9 verbundenen Stellantriebs (nicht gezeigt) angeordnet wird. Dadurch wird eine starre Verbindung bereit gestellt, die verhindert, dass sich der Stellantrieb um die eigene Stellachse drehen kann.

Das Schaltelement 5 weist verschiedene Strömungskanäle 17, 19, 21, 29, 31 auf, die korrespondierend zu den Anschlüssen A, B, C, D, E angeordnet sind. Die drei ersten Anschlüsse A, B, D und die dazu korrespondierenden Strömungskanäle 17, 19 sind dabei in einer ersten Schaltebene I ausgebildet. Dabei ist der Anschluss A zentral angeordnet und jeweils um 90° gegen den Uhrzeigersinn bzw. im Uhrzeigersinn versetzt sind die Anschlüsse D bzw. B angeordnet. Die zugehörigen Strömungskanäle 17, 19 sind als Langlochdurchbrechungen im Schaltelement 5 ausgebildet und erstrecken sich jeweils über einen Winkelbereich von 90° bzw. 45°, so dass wahlweise die Anschlüsse A und B oder die Anschlüsse B und D miteinanderverbindbar sind. Die Höhe bzw. die Außenradien der Langlochströmungskanäle 17, 19 stimmen mit den jeweiligen Innendurchmessern der Anschlüsse A, B, D, die am Schaltelement 5 anliegen, überein. Der Langlochströmungskanal 17 erstreckt sich dabei über einen Umfangswinkelbereich von 90° und der Langlochströmungskanal 19 erstreckt sich dabei über einen Umfangswinkelbereich von 45°. Zwischen den beiden Langlochströmungskanälen 17, 19 ist ein Steg vorgesehen, der nur so breit ausgeführt ist, dass er das Schaltelement 5 konstruktiv abstützt und dabei noch nicht strömungstechnisch beeinträchtigt. Anstelle der beiden getrennt ausgebildeten Langlochströmungskanäle 17, 19 könnte auch ein einzelner Langlochströmungskanal vorgesehen werden, der sich dann über einen Umfangswinkelbereich von ca. 135° erstreckt.

In einer ersten Schaltungsebene II der zweiten Schaltungsebenen ist der erste der zweiten Anschlüsse, Anschluss C, zusammen mit dem damit kommunizierenden Strömungskanal 21 angeordnet. Dieser Strömungskanal 21 ist als kreisförmige Durchbrechung im Schaltelement 5 ausgebildet, wobei dessen Durchmesser so bemessen ist, dass er mit dem Innendurchmesser des Anschlusses C am Schaltelement 5 übereinstimmt. Der Strömungskanal 21 ist in Bezug auf die Längsachse L des Mehrwegemischventils 129 unterhalb des Strömungskanals 19 angeordnet, wobei der zum Langlochströmungskanal 17 weisende Außenradius des Langlochströmungskanals 19 mit dem Umfang des Strömungskanals 21 in Bezug auf die Längsachse L fluchtet.

Im Boden 27 des Schaltelements 5, der zum Anschluss E weist, sind zwei gegenüberliegend angeordnete Strömungskanäle 29, 31 vorgesehen, die mit korrespondierenden Anschlussöffnungen 33, 35 des Anschlusses E eine dritte Schaltungsebene ausbilden. Die Durchmesser der Strömungskanäle 29, 31 stimmen dabei wiederum mit den Durchmessern der zugehörigen Anschlussöffnungen 33, 35 überein, wobei die jeweilige Summe der Öffnungsflächen der Strömungskanäle 29, 31 bzw. der Anschlussöffnungen 33, 35 identisch ist zur Öffnungsfläche des Strömungskanals 21 bzw. der Anschlüsse A, B, C, D und die in die Langlochströmungskanäle 17, 19 einbeschriebene Öffnungsfläche. Die Durchmesser der Strömungskanäle 29, 31 sind dabei so gehalten, dass Zwischenstellungen des Schaltelements 5 vorhanden sind, in denen die Kommunikation zwischen den Strömungskanälen 29, 31 und den Anschlussöffnungen 33, 35 unterbunden ist.

Um einen verschleißfreien und dabei abgedichteten Lauf des Stellelements 5 im Gehäuse 3 zu ermöglichen, ist das Stellelement 5 mit einer EPDM beschichteten Oberfläche versehen und weist zusätzlich rasterartig angeordnete, Reibung vermindernde quadratische Vertiefungen 23 auf. Zur weiteren Abdichtung der Anschlüsse A, B, C, D gegenüber dem Schaltelement 5 sind die Anschlüsse A, B, C, D umgebende Dichtringe (nicht gezeigt) vorgesehen und bezüglich des Anschlusses E sind die Strömungskanäle 29, 31 im Boden 27 des Schaltelements 5 von Dichtringen 37, 39 umgeben. Weiterhin ist ein Dichtring 25 zur Abdichtung des Gehäuses 5 vorgesehen und die Durchführung der Antriebswelle 9 ist gegenüber dem Abdeckelement 13 mittels Dichtringen 41, 43 fluiddicht abgedichtet.

In den Fig. 4 bis 6 ist eine Stellung des Schaltelements 5 gegenüber dem Gehäuse 3 gezeigt, mit der ein Mischzustand verwirklicht ist, bei dem die Anschlüsse A und B der ersten Schaltebene I miteinander kommunizieren und die restlichen Anschlüsse C, D, E gesperrt sind, also in keiner Fluid führenden Kommunikation stehen (dies stellt den Mischzustand a) dar).

Dadurch, dass das Schaltelement durch Drehung der Antriebswelle 9 im Uhrzeigersinn (von oben auf den Deckel 7 schauend) bewegt wird, können dann die weiteren Mischzustände b) bis f) sukzessive durchlaufen werden, wobei die Mischzustände a) bis e) innerhalb einer Drehung um 90° durchlaufen werden und Mischzustand f), also die vollständige Kommunikation zwischen den Anschlüssen D und E, bei der Anschluss D maximal mit Strömungskanal 19 geöffnet ist und die Anschlussöffnungen 33, 35 maximal mit den korrespondierenden Strömungskanälen 29, 31 geöffnet sind, nach 135°erreicht ist.

Zur Verhinderung einer Drehung gegen den Uhrzeigersinn von Mischzustand a) aus, wodurch eine Verbindung der Anschlüsse A, B, C, E ermöglicht würde, können ein mechanischer Anschlag (nicht gezeigt) bspw. auf der Antriebswelle 9 oder ein Endlagenschalter (nicht gezeigt) eines Antriebsmotors (nicht gezeigt) vorgesehen sein. Gleichfalls können zur Verhinderung eines Weiterdrehens im Uhrzeigersinn über den Mischzustand f) hinaus ebenfalls ein entsprechender mechanischer Anschlag (nicht gezeigt) bspw. auf der Antriebswelle 9 oder ein entsprechender Endlagenschalter (nicht gezeigt) eines Antriebsmotors (nicht gezeigt) vorgesehen sein.

Aus der in Fig. 7a, 7b gezeigten Explosionsdarstellung bezüglich des Zusammenwirkens von Schaltelement 5, Antriebswelle 9 und Abdeckelement 13 wird deutlich, dass zwischen dem Abdeckelement 13 und Antriebswelle 9 auf der einen Seite und Schaltelement 5 auf der anderen Seite ein Loslager besteht, mit dem Maßtoleranzen bzw. Achsabweichungen (MT) zwischen den Komponenten 5, 9, 13 ausgeglichen werden. Diesbezüglich ist die an der Antriebswelle 9 angeordnete Kreuzaufnahme 45 gegenüber den korrespondierenden Ausnehmungen 47 am Schaltelement 5 untermaßig ausgeführt. Außerdem ist ein als Blattfeder 49 ausgebildetes Federelement an der Kreuzaufnahme 45 vorgesehen, das die notwendige Dichtkraft für die Abdichtung der der Strömungskanäle 29, 31 gegenüber dem Gehäuse 3 durch anpressen der Dichtringe 37, 39 (in Fig. 7a nicht gezeigt) an das Gehäuse 3 bereitstellt.

Es ist somit sehr deutlich geworden, dass sich für die erfindungsgemäße mehrkreisige Heizungsanlage 100 also insgesamt große konstruktive Vorteile ergeben, so dass die notwendige Verteilvorrichtung 111 wesentlich kompakter und einfacher aufgebaut werden kann, wodurch sie wesentlich kostengünstiger ausfällt. Aber auch die zugehörige Steuerung ist wesentlich einfacher und kostengünstiger darstellbar, da zahlreiche Bauelemente nicht vorhanden sind und damit deren Ansteuerung entfällt. Darüber hinaus ist die erfindungsgemäße mehrkreisige Heizungsanlage 100 auch effizienter, weil aufgrund der wegfallenden Teile gegenüber einer mit konventionellen Mitteln aufgebaute mehrkreisige Heizungsanlage 200 die hydraulischen Wege kürzer gehalten werden können und dadurch weniger Wärmeverluste entstehen.

## Patentansprüche

1. Mehrkreisige Heizungs- oder Kühlanlage (100) mit einem Heizquellenkreises (101), HK, einem Pufferkreises (103), PK, und einem gemischten Heizkreises (105), MK, mit
- mindestens einer Wärmequelle (101a), die Teil des Heizquellenkreises (101), HK, mit einem Heizquellenkreisvorlauf, HK-VL, mit einer HK-VL-Temperatur und einem Heizquellenkreisrücklauf, HK-RL, mit einer HK-RL-Temperatur ist, und zumindest zwei Wärmesenken (103a, 105a), wobei
- eine erste Wärmesenke (103a) Teil des Pufferkreises (103), PK, mit einem Pufferkreisvorlauf (104a), PK-VL, mit einer PK-VL-Temperatur und einem ersten Pufferkreisrücklauf (104b), PK-RL1, mit einer PK-RL-Temperatur ist und
- eine zweite Wärmesenke (105a) Teil des gemischten Heizkreises (105), MK, mit einem gemischten Heizkreisvorlauf, MK-VL, mit einer MK-VL-Temperatur und einem gemischten Heizkreisrücklauf, MK-RL, mit einer MK-RL-Temperatur ist, wobei
- die erste Wärmesenke als Pufferspeicher (103a) für das Energie transportierende Medium ausgebildet ist, wobei der Pufferkreis (103) einen zweiten Pufferkreisrücklauf (104c), PK-RL2, mit einer PK-RL2-Temperatur aufweist, wobei
- eine Verteilvorrichtung (111) mit hydraulischen Mitteln zum Verteilen eines Energie transportierenden Mediums vorgesehen ist,
**dadurch gekennzeichnet, dass**
- die Verteilvorrichtung (111) ein Mehrwegemischventil (129) mit zumindest fünf Anschlüssen (A, B, C, D, E) aufweist
- und der Heizquellenkreis (101), der Pufferkreis (103) und der gemischte Heizkreis (105) zumindest mit einem der Anschlüsse (A, B, C, D, E) des Mehrwegemischventils (129) verbunden sind, wobei
- der HK-VL mit einem ersten Anschluss (D) des Mehrwegemischventils (129) verbunden ist,
- der HK-RL sowohl mit dem MK-RL als auch parallel mit dem PK-RL2 (104c) verbunden ist,
- der PK-RL1 (104b) mit einem zweiten Anschluss (C) des Mehrwegemischventils (129) verbunden ist,
- der PK-VL (104a) mit einem dritten Anschluss (E) des Mehrwegemischventils (129) verbunden ist,
- der MK-RL mit einem vierten Anschluss (A) des Mehrwegemischventils (129) und bevorzugt parallel auch mit dem zweiten Anschluss (C) verbunden ist,
- der PK-RL2 (104c) mit dem MK-RL verbunden ist
- der MK-VL mit einem fünften Anschluss (B) des Mehrwegemischventils (129) verbunden ist, so dass in einem Betriebszustand der mehrkreisigen Heizungs- oder Kühlanlage (100) eine Vorrangschaltung zur Befüllung des Pufferspeichers (103a) durch die Wärmequelle (101a) zu verwirklichen, wobei nur der Pufferkreis (103) aus dem Heizquellenheizkreis (101) mit Wärme versorgt wird.

2. Mehrkreisige Heizungs- oder Kühlanlage (100) nach Anspruch 1, **dadurch gekennzeichnet, dass** an den Pufferkreis (103) eine Trinkwarmwasserbereitung (107) angeschlossen ist, die bevorzugt einen ersten Wärmeübertrager (107a) aufweist, der einen Trinkwarmwasserkreislauf (107') vom Kreislauf (107") des Energie transportierenden Mediums der Trinkwarmwasserbereitung (107) trennt, wobei insbesondere im Kreislauf (107") des Energie transportierenden Mediums der Trinkwarmwasserbereitung eine erste Umwälzpumpe (155) vorgesehen ist und/oder dass der Pufferkreis (103) mit zumindest einer weiteren Wärmequelle (157, 159) verbunden ist, wobei bevorzugt zwischen Pufferspeicher (103a) und weiterer Wärmequelle (157) ein zweiter Wärmeübertrager (157a) vorgesehen ist.

3. Mehrkreisige Heizungs- oder Kühlanlage (100) nach einem der vorherigen Ansprüche, **dadurch gekennzeichnet, dass** zumindest sechs Betriebszustände des Mehrwegmischventils (129) einstellbar sind:
a) Verbinden des vierten Anschlusses (A) mit dem fünften (B),
b) gleichzeitige Verbindung des vierten Anschlusses (A) mit dem fünften Anschluss (B) und des zweiten Anschlusses (C) mit dem fünften Anschluss (B),
c) Verbinden des zweiten Anschlusses (C) mit dem fünften Anschluss (B),
d) gleichzeitiges Verbinden des zweiten Anschlusses (C) mit dem fünften Anschluss (B) und des ersten Anschlusses (D) mit dem fünften Anschluss (B),
e) Verbinden des ersten Anschlusses (D) mit dem fünften Anschluss (B) und
f) Verbinden des ersten Anschlusses (D) mit dem dritten Anschluss (E) des Mehrwegemischventils (129).

4. Mehrkreisige Heizungs- oder Kühlanlage (100) nach Anspruch 3, **dadurch gekennzeichnet, dass** die Heizungsanlage (100) angepasst ist,
- Betriebszustand a) einzustellen, wenn keine Wärmeanforderung an den Pufferkreis (103) und/oder keine Wärmeanforderung an die Heizquelle (101a) aus dem gemischten Heizkreis (105) bestehen,
- Betriebszustand b) einzustellen, wenn eine Wärmeanforderung an den gemischten Heizkreis (105) besteht, die aus dem Pufferkreis (103) befriedigt werden kann, und die PK-RL1-Temperatur größer der MK-VL-Temperatur ist,
- Betriebszustand c) einzustellen, wenn eine Wärmeanforderung an den gemischten Heizkreis (105) besteht, die aus dem Pufferkreis (103) befriedigt werden kann, und die PK-RL1-Temperatur gleich der MK-VL-Temperatur ist,
- Betriebszustand d) einzustellen, wenn eine Wärmeanforderung an den gemischten Heizkreis (105) besteht, die aus dem Heizquellenkreis (101) befriedigt werden soll, und die HK-VL-Temperatur größer der MK-VL-Temperatur ist,
- Betriebszustand e) einzustellen, wenn eine Wärmeanforderung an den gemischten Heizkreis (105) besteht, die aus dem Heizquellenkreis (101) befriedigt werden soll, und die HK-VL-Temperatur gleich der MK-VL-Temperatur ist und
- Betriebszustand f) einzustellen, wenn der Pufferkreis (103) mit Wärme aus dem Heizquellenkreis (101) in Vorrangschaltung versorgt werden soll.

5. Mehrkreisige Heizungs- oder Kühlanlage (100) nach einem der vorherigen Ansprüche, **dadurch gekennzeichnet, dass** eine stromaufwärts sperrende Rückflusssperre (151) zwischen MK-RL und HK-RL angeordnet ist, die bevorzugt zwischen dem vierten Anschluss (A) und der Verbindung (143) zwischen HK-RL und PK-RL2 (104c) angeordnet ist und/oder dass eine stromaufwärts sperrende Rückflusssperre (133) zwischen PK-RL1 (104b) und HK-RL angeordnet ist, die bevorzugt stromaufwärts eines Knotens (145) zwischen dem zweiten Anschluss (C), dem PK-RL1 (104b) und dem HK-RL angeordnet ist und/oder dass ein Überströmventil (153) zwischen MK-RL und dem zweiten Anschluss (C) angeordnet ist.

6. Mehrkreisige Heizungs- oder Kühlanlage (100) nach einem der vorherigen Ansprüche, **dadurch gekennzeichnet, dass** eine zweite Umwälzpumpe (139) im MK, insbesondere zwischen dem fünften Anschluss (B) und dem MK-VL angeordnet ist und/oder dass eine dritte Umwälzpumpe (141) im HK, insbesondere zwischen dem HK-RL und einem Knoten (143) zwischen dem MK-RL und PK-RL1 angeordnet ist.

7. Mehrkreisige Heizungs- oder Kühlanlage (100) nach einem der vorherigen Ansprüche, **dadurch gekennzeichnet, dass** ein erster Temperatursensor im MK-VL angeordnet ist, der mit einer Steuer- und Regeleinheit (109) der Heizungs- oder Kühlanlage (100) gekoppelt ist und/oder ein zweiter Temperatursensor an dem Pufferspeicher (103a) angeordnet ist, der mit der Steuer- und Regeleinheit (109) der Heizungs- oder Kühlanlage (100) gekoppelt ist und/oder ein dritter Temperatursensor im PK-RL1 (104b) angeordnet ist, der mit der Steuer- und Regeleinheit (109) der Heizungs- oder Kühlanlage (100) gekoppelt ist.

8. Verfahren zum Betreiben einer mehrkreisigen Heizungs- oder Kühlanlage (100) nach einem der Ansprüche 3 bis 4, und 5 bis 7 in Verbindung mit Anspruch 3, mit zumindest einem Heizquellenheizkreis (101), zumindest einem gemischten Heizkreis (105) und zumindest einem Pufferkreis (103), **dadurch gekennzeichnet, dass** in:
- einem ersten Betriebszustand der gemischte Heizkreis (105) ohne äußere Wärmezufuhr betrieben wird,
- in einem zweiten Betriebszustand der gemischte Heizkreis (105) aus dem Pufferkreis (103) mit Wärme versorgt wird, wobei dem Vorlauf des gemischten Heizkreises (105) Wärmeträgermedium aus dem Rücklauf des gemischten Heizkreises (105) zugemischt wird,
- in einem dritten Betriebszustand der gemischte Heizkreis (105) aus dem Pufferkreis (103) mit Wärme versorgt wird, ohne dass dem Vorlauf des gemischten Heizkreises (105) Wärmeträgermedium aus dem Rücklauf des gemischten Heizkreises (105) zugemischt wird,
- in einem vierten Betriebszustand der gemischte Heizkreis (105) aus dem Heizquellenheizkreis (101) mit Wärme versorgt wird, wobei dem Vorlauf des gemischten Heizkreises (105) Wärmeträgermedium aus dem Rücklauf des Pufferkreises 103 zugemischt wird,
- in einem fünften Betriebszustand der gemischte Heizkreis (105) aus dem Heizquellenheizkreis (101) mit Wärme versorgt wird, ohne dass dem Vorlauf des gemischten Heizkreises (105) Wärmeträgermedium aus dem Rücklauf des gemischten Heizkreises (105) zugemischt wird, wobei die Heizquelle (101a) bevorzugt gleitend am Bedarf des gemischten Heizkreises (105) gefahren wird, und
- in einem sechsten Betriebszustand nur der Pufferkreis (103) aus dem Heizquellenheizkreis (101) mit Wärme versorgt wird,
wobei bevorzugt vorgesehen ist, dass der Pufferkreis (103) mit einer Trinkwarmwasseraufbereitung (107) verbunden ist und/oder dass der Pufferkreis (103) mit zumindest einer weiteren Wärmequelle, insbesondere einer Solarthermiequelle (157, 159) verbunden ist.

## Claims

1. A multi-circuit heating or cooling system (100) having a heating source circuit (101), HK, a buffer circuit (103), PK, and a mixed heating circuit (105), MK, with
- at least one heat source (101a), which is part of said heating source circuit (101), HK, with a heating source circuit flow, HK-VL, with an HK-VL temperature and a heating source circuit return, HK-RL, with an HK-RL temperature, and at least two heat sinks (103a, 105a), wherein
- a first heat sink (103a) is part of said buffer circuit (103), PK, with a buffer circuit flow (104a), PK-VL, with a PK-VL temperature and a first buffer circuit return (104b), PK-RL1, with a PK-RL temperature and
- a second heat sink (105a) is part of said mixed heating circuit (105), MK, with a mixed heating circuit flow, MK-VL, with an MK-VL temperature and a mixed heating circuit return, MK-RL, with an MK-RL temperature, wherein
- said first heat sink is formed as a buffer store (103a) for the energy-transporting medium, wherein said buffer circuit (103) has a second buffer circuit return (104c), PK-RL2, with a PK-RL2 temperature, wherein
- a distributor device (111) with hydraulic means for distributing an energy-transporting medium is provided,
**characterised in that**
- said distribution device (111) comprises a multiple-way mixing valve (129) with at least five ports (A, B, C, D, E)
- and said heating source circuit (101), said buffer circuit (103) and said mixed heating circuit (105) are connected to at least one of said ports (A, B, C, D, E) of said multiple-way mixing valve (129), wherein
- said HK-VL is connected to a first port (D) of said multiple-way mixing valve (129),
- said HK-RL is connected both to said MK-RL and in parallel to said PK-RL2 (104c),
- said PK-RL1 (104b) is connected to a second port (C) of said multiple-way mixing valve (129),
- said PK-VL (104a) is connected to a third port (E) of said multiple-way mixing valve (129),
- said MK-RL is connected to a fourth port (A) of said multiple-way mixing valve (129) and preferably also in parallel to said second port (C),
- said PK-RL2 (104c) is connected to said MK-RL,
- said MK-VL is connected to a fifth port (B) of said multiple-way mixing valve (129) so as to implement priority control for the filling of said buffer store (103a) by said heat source (101a) in an operating state of said multi-circuit heating or cooling system (100), wherein only said buffer circuit (103) is supplied with heat from said heating source heating circuit (101).

2. The multi-circuit heating or cooling system (100) according to claim 1, **characterised in that** a potable hot water processing means (107) is connected to said buffer circuit (103), said potable hot water processing means (107) preferably comprising a first heat transfer unit (107a), which separates a potable hot water circuit (107') from the circuit (107") of the energy-transporting medium of said potable hot water processing means (107), wherein a first circulating pump (155) is provided in particular in said circuit (107") of said energy-transporting medium of said potable hot water processing means and/or that said buffer circuit (103) is connected to at least one further heat source (157, 159), wherein a second heat transfer unit (157a) is preferably provided between buffer store (103a) and further heat source (157).

3. The multi-circuit heating or cooling system (100) according to one of the preceding claims, **characterised in that** at least six operating states of said multiple-way mixing valve (129) can be set:
a) connecting said fourth port (A) to said fifth port (B),
b) simultaneously connecting said fourth port (A) to said fifth port (B) and said second port (C) to said fifth port (B),
c) connecting said second port (C) to said fifth port (B),
d) simultaneously connecting said second port (C) to said fifth port (B) and said first port (D) to said fifth port (B),
e) connecting said first port (D) to said fifth port (B) and
f) connecting said first port (D) to said third port (E) of said multiple-way mixing valve (129).

4. The multi-circuit heating or cooling system (100) according to claim 3, **characterised in that** said heating system (100) is adapted
- to set operating state a) if there is no heat request to said buffer circuit (103) and/or no heat request to said heating source (101a) from said mixed heating circuit (105),
- to set operating state b) if there is a heat request to said mixed heating circuit (105) that can be met from said buffer circuit (103) and the PK-RL1 temperature is greater than the MK-VL temperature,
- to set operating state c) if there is a heat request to said mixed heating circuit (105) that can be met from said buffer circuit (103) and the PK-RL1 temperature is equal to the MK-VL temperature,
- to set operating state d) if there is a heat request to said mixed heating circuit (105) which is to be met from said heating source circuit (101) and the HK-VL temperature is greater than the MK-VL temperature,
- to set operating state e) if there is a heat request to said mixed heating circuit (105) which is to be met from said heating source circuit (101) and the HK-VL temperature is equal to the MK-VL temperature and
- to set operating state f) if said buffer circuit (103) is to be supplied with heat from said heating source circuit (101) with priority control.

5. The multi-circuit heating or cooling system (100) according to one of the preceding claims, **characterised in that** a return flow blocking means (151) with upstream blocking action is arranged between MK-RL and HK-RL, which is preferably arranged between said fourth port (A) and said connection (143) between HK-RL and PK-RL2 (104c), and/or that a return flow blocking means (133) with upstream blocking action is arranged between PK-RL1 (104b) and HK-RL, which is preferably arranged upstream of a node (145) between said second port (C), said PK-RL1 (104b) and said HK-RL, and/or that an overflow valve (153) is arranged between MK-RL and said second port (C).

6. The multi-circuit heating or cooling system (100) according to one of the preceding claims, **characterised in that** a second circulating pump (139) is arranged in said MK, in particular between said fifth port (B) and said MK-VL, and/or that a third circulating pump (141) is arranged in said HK, in particular between said HK-RL and a node (143) between said MK-RL and PK-RL1.

7. The multi-circuit heating or cooling system (100) according to one of the preceding claims, **characterised in that** a first temperature sensor is arranged in said MK-VL, which is linked to an open-loop and closed-loop control unit (109) of said heating or cooling system (100), and/or a second temperature sensor is arranged on said buffer store (103a), which is linked to said open-loop and closed-loop control unit (109) of said heating or cooling system (100), and/or a third temperature sensor is arranged in said PK-RL1 (104b), which is linked to said open-loop and closed-loop control unit (109) of said heating or cooling system (100).

8. A method for operating a multi-circuit heating or cooling system (100) according to one of claims 3 to 4, and 5 to 7 in conjunction with claim 3, having at least one heating source heating circuit (101), at least one mixed heating circuit (105) and at least one buffer circuit (103), **characterised in that:**
- in a first operating state said mixed heating circuit (105) is operated without an external heat supply,
- in a second operating state said mixed heating circuit (105) is supplied with heat from said buffer circuit (103), wherein heat transfer medium from the return of said mixed heating circuit (105) is added to the flow of said mixed heating circuit (105),
- in a third operating state said mixed heating circuit (105) is supplied with heat from said buffer circuit (103), without heat transfer medium from the return of said mixed heating circuit (105) being added to the flow of said mixed heating circuit (105),
- in a fourth operating state said mixed heating circuit (105) is supplied with heat from said heating source heating circuit (101), wherein heat transfer medium from the return of said buffer circuit 103 is added to the flow of said mixed heating circuit (105),
- in a fifth operating state said mixed heating circuit (105) is supplied with heat from said heating source heating circuit (101) without heat transfer medium from the return of said mixed heating circuit (105) being added to the flow of said mixed heating circuit (105), wherein said heating source (101a) is preferably modulated according to the demand of said mixed heating circuit (105), and
- in a sixth operating state only said buffer circuit (103) is supplied with heat from said heating source heating circuit (101),
wherein it is preferably provided that said buffer circuit (103) is connected to a potable hot water processing means (107) and/or that said buffer circuit (103) is connected to at least one further heat source, in particular a solar thermal energy source (157, 159).

## Revendications

1. Installation de chauffage ou de refroidissement à plusieurs circuits (100) avec un circuit de la source de chauffage (101), HK, un circuit tampon (103), PK, et un circuit de chauffage mixte (105), MK, avec
- au moins une source de chaleur (101a), qui fait partie du circuit de la source de chauffage (101), HK, avec un aller du circuit de la source de chauffage, HK-VL, avec une température HK-VL et un retour du circuit de la source de chauffage, HK-RL, avec une température HL-RL, et au moins deux dissipateurs thermiques (103a, 105a), dans lequel
- un premier dissipateur thermique (103a) fait partie du circuit tampon (103), PK, avec un aller du circuit tampon (104a), PK-VL, avec une température PK-VL et un premier retour du circuit tampon (104b), PK-RL1, avec une température du PK-RL et
- un deuxième dissipateur thermique (105a) fait partie du circuit de chauffage mixte (105), MK, avec un aller du circuit de chauffage mixte, MK-VL, avec une température MK-VL et un retour du circuit de chauffage mixte, MK-RL, avec une température du MK-RL,
- le premier dissipateur thermique étant conçu comme un accumulateur tampon (103a) pour le fluide transportant de l'énergie, le circuit tampon (103) présentant un deuxième retour du circuit tampon (104c), PK-RL2, avec une température du PK-RL2,
- un dispositif de distribution (111) étant prévu ayant des moyens hydrauliques pour distribuer un fluide transportant de l'énergie,
**caractérisée en ce que**
- le dispositif de distribution (111) présente une vanne mélangeuse à plusieurs voies (129) avec au moins cinq raccordements (A, B, C, D, E),
- et **en ce que** le circuit de la source de chauffage (101), le circuit tampon (103) et le circuit de chauffage mixte (105) sont reliés au moins à l'un des raccordements (A, B, C, D, E) de la vanne mélangeuse à plusieurs voies (129),
- le HK-VL étant relié à un premier raccordement (D) de la vanne mélangeuse à plusieurs voies (129),
- le HK-RL étant relié aussi bien au MK-RL que parallèlement au PK-RL2 (104c),
- le PK-RL1 (104b) étant relié à un deuxième raccordement (C) de la vanne mélangeuse à plusieurs voies (129),
- le PK-VL (104a) étant relié à un troisième raccordement (E) de la vanne mélangeuse à plusieurs voies (129),
- le MK-RL étant relié à un quatrième raccordement (A) de la vanne mélangeuse à plusieurs voies (129) et de préférence parallèlement aussi au deuxième raccordement (C),
- le PK-RL2 (104c) étant relié au MK-RL,
- le MK-VL étant relié à un cinquième raccordement (B) de la vanne mélangeuse à plusieurs voies (129) de manière à, dans un état de fonctionnement de l'installation de chauffage ou de refroidissement à plusieurs circuits (100), réaliser un circuit prioritaire pour le remplissement de l'accumulateur tampon (103a) par la source de chaleur (101a), seul le circuit tampon (103) étant alimenté en chaleur à partir du circuit de chauffage de la source de chauffage (101).

2. Installation de chauffage ou de refroidissement à plusieurs circuits (100) selon la revendication 1, **caractérisée ce qu'**un dispositif de préparation d'eau potable chaude (107) est raccordé au circuit tampon (103) qui présente de préférence un premier échangeur thermique (107a), qui sépare un circuit d'eau potable chaude (107') du circuit (107") du fluide transportant de l'énergie du dispositif de préparation d'eau potable chaude (107), une première pompe de circulation (155) étant prévue en particulier dans le circuit (107") du fluide transportant de l'énergie du dispositif de préparation d'eau potable chaude et/ou en ce que le circuit tampon (103) est relié au moins à une autre source de chaleur (157,159), un deuxième échangeur thermique (157a) étant prévu de préférence entre l'accumulateur tampon (103a) et une autre source de chaleur (157).

3. Installation de chauffage ou de refroidissement à plusieurs circuits (100) selon l'une quelconque des revendications précédentes, **caractérisée en ce que** au moins six états de fonctionnement de la vanne mélangeuse à plusieurs voies (129) peuvent être réglés :
a) connexion du quatrième raccordement (A) avec le cinquième (B),
b) connexion simultanée du quatrième raccordement (A) avec le cinquième raccordement (B) et du deuxième raccordement (C) avec le cinquième raccordement (B),
c) connexion du deuxième raccordement (C) avec le cinquième raccordement (B),
d) connexion simultanée du deuxième raccordement (C) avec le cinquième raccordement (B) et du premier raccordement (D) avec le cinquième raccordement (B),
e) connexion du premier raccordement (D) avec le cinquième raccordement (B) et
f) connexion du premier raccordement (D) avec le troisième raccordement (E) de la vanne mélangeuse à plusieurs voies (129).

4. Installation de chauffage ou de refroidissement à plusieurs circuits (100) selon la revendication 3, **caractérisée en ce que** l'installation de chauffage (100) est configurée pour
- sélectionner l'état de fonctionnement a) lorsqu'il n'existe aucun besoin en chaleur au circuit tampon (103) et/ou aucun besoin en chaleur à la source de chauffage (101a) depuis le circuit de chauffage mixte (105),
- sélectionner l'état de fonctionnement b) lorsqu'il existe un besoin en chaleur au circuit de chauffage mixte (105) qui peut être satisfait à partir du circuit tampon (103), et que la température PK-RL1 est supérieure à la température MK-VL,
- sélectionner l'état de fonctionnement c) lorsqu'il existe un besoin en chaleur au circuit de chauffage mixte (105) qui peut être satisfait à partir du circuit tampon (103), et que la température PK-RL1 est égale à la température MK-VL,
- sélectionner l'état de fonctionnement d) lorsqu'il existe un besoin en chaleur au circuit de chauffage mixte (105) qui doit être satisfait à partir du circuit de la source de chauffage (101) et que la température HK-VL est supérieure à la température MK-VL,
- sélectionner l'état de fonctionnement e) lorsqu'il existe un besoin en chaleur au circuit de chauffage mixte (105) qui doit être satisfait à partir du circuit de la source de chauffage (101), et que la température de l'HK-VL est égale à la température de MK-VL et
- pour sélectionner l'état de fonctionnement f) lorsque le circuit tampon (103) doit être alimenté en chaleur à partir du circuit de la source de chauffage (101) en commutation prioritaire.

5. Installation de chauffage ou de refroidissement à plusieurs circuits (100) selon l'une quelconque des revendications précédentes, **caractérisée en ce qu**'un clapet anti-retour (151) bloquant en amont est disposé entre le MK-RL et le HK-RL, lequel clapet est disposé de préférence entre le quatrième raccordement (A) et la connexion (143) entre le HK-RL et le PK-RL2 (104c) et/ou en ce qu'un clapet anti-retour (133) bloquant en amont est installé entre le PK-RL1 (104b) et le HK-RL, et disposé de préférence en amont d'un noeud (145) entre le deuxième raccordement (C), le PK-RL1 (104b) et le HK-RL et/ou en ce qu'une soupape de décharge (153) est disposée entre le MK-RL et le deuxième raccordement (C).

6. Installation de chauffage ou de refroidissement à plusieurs circuits (100) selon l'une quelconque des revendications précédentes, **caractérisée en ce qu'**une deuxième pompe de circulation (139) est disposée dans le MK, notamment entre le cinquième raccordement (B) et le MK-VL et/ou **en ce qu'**une troisième pompe de circulation (141) est disposée dans le HK, plus précisément entre le HK-RL et un noeud (143) entre le MK-RL et le PK-RL1.

7. Installation de chauffage ou de refroidissement à plusieurs circuits (100) selon l'une quelconque des revendications précédentes, **caractérisée en ce qu**'un premier capteur de température est disposé dans le MK-VL lequel capteur est couplé avec une unité de commande et de réglage (109) de l'installation de chauffage ou de refroidissement (100) et/ou en ce qu'un deuxième capteur de température est disposé sur l'accumulateur tampon (103a) lequel capteur est couplé avec une unité de commande et de réglage (109) de l'installation de chauffage ou de refroidissement (100) et/ou en ce qu'un troisième capteur de température est disposé dans le PK-RL1 (104b) lequel capteur est couplé avec l'unité de commande et de réglage (109) de l'installation de chauffage ou de refroidissement (100).

8. Procédé fonctionnement d'une installation de chauffage ou de refroidissement à plusieurs circuits (100) selon l'une des revendications 3 à 4, et 5 à 7 en association avec la revendication 3, avec au moins un circuit de chauffage de la source de chauffage (101), au moins un circuit de chauffage mixte (105) et au moins un circuit tampon (103), **caractérisé en ce que** :
- dans un premier état de fonctionnement, le circuit de chauffage mixte (105) fonctionne sans apport de chaleur extérieur,
- dans un deuxième état de fonctionnement, le circuit de chauffage mixte (105) est alimenté en chaleur à partir du circuit tampon (103), du fluide caloporteur étant ajouté à l'aller du circuit de chauffage mixte (105) depuis le retour du circuit de chauffage mixte (105),
- dans un troisième état de fonctionnement, le circuit de chauffage mixte (105) est alimenté en chaleur à partir du circuit tampon (103), sans que du fluide caloporteur soit ajouté à l'aller du circuit de chauffage mixte (105) depuis le retour du circuit de chauffage mixte (105),
- dans un quatrième état de fonctionnement, le circuit de chauffage mixte (105) est alimenté en chaleur à partir du circuit de chauffage de la source de chauffage (101), du fluide caloporteur étant ajouté à l'aller du circuit de chauffage mixte (105) depuis le circuit tampon (103),
- dans un cinquième état de fonctionnement, le circuit de chauffage mixte (105) est alimenté en chaleur à partir du circuit de chauffage de la source de chauffage (101), sans que du fluide caloporteur soit ajouté à l'aller du circuit de chauffage mixte (105) depuis le retour du circuit de chauffage mixte (105), la source de chauffage (101a) étant gérée de préférence en fonction du besoin du circuit de chauffage mixte (105), et
- dans un sixième état de fonctionnement, seul le circuit tampon (103) est alimenté en chaleur à partir du circuit de chauffage de la source de chauffage (101),
en étant de préférence prévu que le circuit tampon (103) soit relié à un dispositif de préparation d'eau potable chaude (107) et/ou le circuit tampon (103) soit relié à au moins une autre source de chaleur, plus précisément une source d'énergie solaire thermique (157,159).
